# EUROPEAN PATENT APPLICATION

(11) **EP 4 329 064 A1**
(43) Date of publication of application: **28.02.2024**
(21) Application number: 22880049.6
(22) Date of filing: 06.09.2022
(51) Int. Cl.: H01M 50/242, H01M 50/204

(54) **BATTERY CELL, BATTERY, ELECTRICAL DEVICE, AND APPARATUS AND METHOD FOR MANUFACTURING BATTERY CELL**

(30) Priority: 14.10.2021 CN 202111200326
(71) Applicant: Contemporary Amperex Technology Co., Limited, Ningde, Fujian 352100 (CN)
(72) Inventor: CHEN, Xingbu, Ningde, Fujian 352100 (CN); WU, Lili, Ningde, Fujian 352100 (CN); SUN, Xin, Ningde, Fujian 352100 (CN); SU, Huisen, Ningde, Fujian 352100 (CN); WEI, Jianren, Ningde, Fujian 352100 (CN); LI, Xuan, Ningde, Fujian 352100 (CN)
(74) Representative: Rowlands, Stuart Michael
(86) International application number: PCT/CN2022/117223
(87) International publication number: WO 2023/061105

(57) **Abstract**

Provided in embodiments of the present application are a battery cell, a battery, an electrical device, and an apparatus and method for manufacturing a battery cell. The battery cell comprises an electrode assembly (1) and a cushioning pad (2). The electrode assembly (1) comprises a main body portion (11) and a tab (12) extending from the main body portion (11). The main body portion (11) comprises a first main body region (111) and a second main body region (112), a thickness of the first main body region (111) along a first direction (T) being smaller than a thickness of the second main body region (112) along the first direction (T). The cushioning pad (2) comprises a compressible first side wall (21). The first side wall (21) comprises a first cushioning portion (211) and a second cushioning portion (212). A thickness of the first cushioning portion (211) along the first direction (T) is greater than a thickness of the second cushioning portion (212) along the first direction (T). The cushioning pad is disposed at the side of the main body portion, such that the first cushioning portion is disposed corresponding to the first main body region, and the second cushioning portion is disposed corresponding to the second main body region.

## Description

### TECHNICAL FIELD

The present application relates to the field of battery technologies, and in particular, to a battery cell, a battery, a power consumption device, an apparatus and method of manufacturing a battery cell.

### BACKGROUND

Energy conservation and emission reduction is a key to a sustainable development of an automobile industry. Electric vehicles have become an important part of the sustainable development of the automotive industry due to their advantages of energy conservation and environmental protection. Battery technology is also an important factor for development of electric vehicles.

During the charging and discharging process of a battery, a cell will expand and increase an external force borne by a housing, affecting a service life of the battery.

### SUMMARY

The present application provides a battery cell, a battery, a power consumption device, a method and apparatus of manufacturing a battery cell, which may alleviate a problem that expansion of the cell causes an external force borne by a housing to increase and affects a service life of the battery.

In a first aspect, the present application provides a battery cell, including:
an electrode assembly, including a main body portion and a tab extending from the main body portion, where the main body portion includes a first main body region and a second main body region, the thickness of the first main body region along a first direction is smaller than the thickness of the second main body region along the first direction; and
a buffer pad, including a compressible first side wall, where the first side wall includes a first buffer portion and a second buffer portion, the thickness of the first buffer portion along the first direction is greater than the thickness of the second buffer portion along the first direction, and the buffer pad is provided on a side face of the main body portion, such that the first buffer portion is provided corresponding to the first main body region, and the second buffer portion is provided corresponding to the second main body region.

In the embodiments provided by the present application, by providing the first buffer portion and the second buffer portion with different thicknesses, the first buffer portion with the larger thickness can be used to make up for the smaller thickness of the first main body region, such that the overall thickness of the main body portion and the buffer pad is substantially uniform, thereby improving a problem of interface wrinkling in the first main body region.

In some embodiments, the battery cell further includes a housing, where the housing is made of a hard material, and an accommodating cavity is provided inside the housing, both the main body portion and the buffer pad are provided in the accommodating cavity; or the housing is made of a soft material, and an accommodating cavity is provided inside the housing, the main body portion is provided in the accommodating cavity, and the buffer pad is provided outside the housing.

When the housing is made of the hard material, both the buffer pad and the main body portion are provided inside the housing, such that the buffer pad can protect the main body portion more directly, and a fitting between the buffer pad and the main body portion is also better, which can more effectively improve the problem of wrinkling in the first main body region where the thickness of the main body portion is small. The buffer pad is provided inside the housing, which may prevent the buffer pad from being affected by edges and corners of a hard housing and may better exert an effect of a thickness gradient design, such that the first buffer portion can be closely fitted with the thinned area of the main body portion, improving a wrinkle problem and providing a better protection and buffering effect. When the housing is made of the soft material, providing the buffer pad outside the housing may still make up for the first main body region with the small thickness of the main body portion through the deformation of the housing, and improve the wrinkling problem of the first main body region.

In some embodiments, the first side wall includes an insulating part made of an insulating material and a buffer part made of a compressible material; or the first side wall is made of a compressible insulating material.

By setting the first side wall with an insulating property, a special insulating pad may be omitted, saving internal space of the housing, and improving space utilization. Omitting the special insulating pad may further improve assembly efficiency.

In some embodiments, the first sidewall is made of porous foam or aerogel. A high porosity of a porous compressible foam may better infiltrate an electrolytic solution, improving a liquid injection rate and a liquid retention capacity of the cell during use.

In some embodiments, a thickened part of the first buffer portion relative to the second buffer portion has the thickness varying in a second direction, the second direction is perpendicular to the first direction; and/or the second buffer portion has the thickness constant in a second direction, the second direction is perpendicular to the first direction.

In some embodiments, the thickened part of the first buffer portion relative to the second buffer portion includes at least one of a flat plate portion, a wedge portion, a step portion, a trapezoidal portion, or an arc portion.

In some embodiments, the first buffer portion and the second buffer portion are integrally formed. In this way, the assembly efficiency may be effectively improved.

In some embodiments, the increased thickness of the first buffer portion relative to the second buffer portion is not less than the reduced thickness of the first main body region relative to the second main body region. This interference design may make a recess formed in the first main body region may be fully filled through the first buffer portion, such that the first main body region may be fully fitted with the first buffer portion, ensuring that a charging interface is flat and not wrinkled.

In some embodiments, the width of the first buffer portion along a second direction is not greater than the width of the first main body region along the second direction, and the second direction is perpendicular to the first direction. This setting may make the width of the first buffer portion smaller than the width of the first main body region in a third direction W, such that a whole composed of the main body portion and the buffer pad may be smoothly put into the interior of the housing, improving assembly convenience.

In some embodiments, the thickness of the second main body region is 0.5 mm~50 mm. Within the value range, the second main body region may be provided with sufficient compressibility to alleviate an expansion stress on the housing, improving the service life of the battery cell.

In some embodiments, the first buffer portion and the second buffer portion have the same or different compression rates when borne by the same compressive stress. This setting may make the first buffer portion and the second buffer portion have the same or different buffer performance, so as to relieve the stress caused by the expansion and deformation of the cell during the charging, which is convenient to adaptively set compression performance of the first buffer portion and the second buffer portion according to the expansion of the cell.

In some embodiments, the buffer pad includes two first side walls opposite to each other, and the two first side walls are respectively abutted against two opposite side faces of the main body portion; or the two first side walls are respectively abutted against side faces far away from each other of two adjacent provided main body portions. The buffer pad may wrap each main body portion respectively, or may wrap a whole composed of a plurality of main body portions.

In some embodiments, the battery cell further includes an end cover, where the buffer pad further includes a connecting portion connected with the end cover. By connecting the buffer pad with the end cover, stability of the buffer pad may be improved to prevent failure due to displacement of the buffer pad relative to the main body portion.

In some embodiments, the buffer pad further includes a bottom wall and two second side walls, where the bottom wall, the two second side walls, and the two first side walls are connected to form the buffer pad in a box shape with an opening at the top.

In some embodiments, the second side wall and/or the bottom wall are made of the insulating material. In this way, the buffer pad may be insulated as a whole, thereby omitting the special insulating pad and improving the space utilization.

In some embodiments, the thickness of an insulating layer of the second side wall and/or the bottom wall is not more than 0.2 mm. This setting may avoid excessive thickness of the second side wall and the bottom wall while ensuring an insulating effect.

In a second aspect, the present application provides a battery, including the battery cell according to the above embodiments.

In a third aspect, the present application provides a power consumption device, including the battery according to the above embodiments, where the battery is configured to supply electrical energy to the power consumption device.

In a fourth aspect, the present application provides a method of manufacturing a battery cell, including:
providing an electrode assembly, the electrode assembly including a main body portion and a tab extending from the main body portion, where the main body portion includes a first main body region and a second main body region, the thickness of the first main body region along a first direction is smaller than the thickness of the second main body region along the first direction; and
providing a buffer pad, the buffer pad including a compressible first side wall, where the first side wall includes a first buffer portion and a second buffer portion, the thickness of the first buffer portion along the first direction is greater than the thickness of the second buffer portion along the first direction, and the buffer pad is abutted against a side face of the main body portion, such that the first buffer portion corresponds to the first main body region, and the second buffer portion corresponds to the second main body region.

In a fifth aspect, the present application provides an apparatus of manufacturing a battery cell, including:
a first provision apparatus configured to provide an electrode assembly, the electrode assembly including a main body portion and a tab extending from the main body portion, where the main body portion includes a first main body region and a second main body region, the thickness of the first main body region along a first direction is smaller than the thickness of the second main body region along the first direction; and
a second provision apparatus configured to provide a buffer pad, the buffer pad including a compressible first side wall, where the first side wall includes a first buffer portion and a second buffer portion, the thickness of the first buffer portion along the first direction is greater than the thickness of the second buffer portion along the first direction, and the buffer pad is abutted against a side face of the main body portion, such that the first buffer portion corresponds to the first main body region, and the second buffer portion corresponds to the second main body region.

The above description is only an overview of the technical solutions of the present application. In order to better under the technical means of the present application, it can be implemented in accordance with the content of the specification, and in order to make the above and other objectives, features and advantages of the present application more obvious and understandable, the specific embodiments of the present application are given as follows.

### BRIEF DESCRIPTION OF DRAWINGS

To describe technical solutions in embodiments of the present application more clearly, the following briefly introduces accompanying drawings required for describing the embodiments of the present application. As will be apparent, the accompanying drawings in the following description show merely some embodiments of the present application, and those of ordinary skill in the art may still derive other drawings from these accompanying drawings without creative efforts.
FIG. 1 is a schematic structural diagram of some embodiments of a power consumption device according to the present application;
FIG. 2 is a schematic structural diagram of some embodiments of a battery according to the present application;
FIG. 3 is a schematic diagram of some embodiments of a battery cell according to the present application;
FIG. 4 is an exploded view of some embodiments of a battery cell according to the present application;
FIG. 5 is a schematic structural diagram of fitting between a main body portion and a buffer pad in some embodiments of a battery cell according to the present application;
FIG. 6 is a schematic structural diagram of a buffer pad in a first embodiment of a battery cell according to the present application;
FIG. 7 is a section view of fitting between a main body portion and a buffer pad in some embodiments of a battery cell according to the present application;
FIG. 8 is a section view of fitting between a main body portion and a buffer pad in other embodiments of a battery cell according to the present application;
FIG. 9 is a schematic structural diagram of a buffer pad in a second embodiment of a battery cell according to the present application;
FIG. 10 is a schematic structural diagram of a buffer pad in a third embodiment of a battery cell according to the present application;
FIG. 11 is a schematic structural diagram of a buffer pad in a fourth embodiment of a battery cell according to the present application;
FIG. 12 is a change diagram of a compression stress curve of three buffer pads in an embodiment of a battery cell according to the present application.

In the accompanying drawings, the drawings are not drawn to actual scale.

### DESCRIPTION OF REFERENCE SIGNS

1000, vehicle; 100, battery; 200, controller; 300, motor; 10, box body; 101, first cover boy; 102, second cover body; 20, battery cell; 1, electrode assembly; 11, main body portion; 111, first main body region; 112, second main body region; 12, tab; 2, buffer pad; 21, first side wall; 211, first buffer portion; 212, second buffer portion; 22, bottom wall; 23, second side wall; 3, housing; 31, first housing wall; 32, second housing wall; 4, end cover assembly; 41, end cover; 42, terminal.

### DESCRIPTION OF EMBODIMENTS

The following describes embodiments of technical solutions of the present application with reference to accompanying drawings in detail. The following embodiments are intended only for describing the technical solutions of the present application, and therefore are only examples, but not for limiting the protection scope of the present application.

Unless otherwise defined, all technical and scientific terms used herein have the same meanings as those commonly understood by those skilled in the art to which the present application belongs. The terms used herein are merely for the purpose of describing specific embodiments, but are not intended to limit the present application. The terms "comprising" and "having" and any variations thereof in the specification and the claims of the present application as well as the brief description of the drawings described above are intended to cover non-exclusive inclusion.

In the description of the embodiments of the present application, the terms "first" and "second" are only intended for distinguishing different objects and shall not be understood as an indication or implication of relative importance or implicit indication of the quantity, specific order or primary and secondary relationship of indicated technical features. "Vertical" is not strictly vertical, but within the allowable range of error. "Parallel" is not strictly parallel, but within the allowable range of error.

"Embodiments" referred to herein mean that the description of specific features, structures, and features in combination with the embodiments are included in at least an embodiment of the present application. The phrase at various locations in the specification does not necessarily refer to the same embodiment, or an independent or alternative embodiment exclusive of other embodiments. Those skilled in the art should explicitly and implicitly understand that the embodiments described herein may be in combination with other embodiments.

In the description of the embodiments of the present application, the term "and/or" describes only an association relationship for describing associated objects and represents that three relationships may exist. For example, A and/or B may represent the following three cases: only A exists, both A and B exist, and only B exists. In addition, the character "/" herein generally indicates an "or" relationship between the associated objects.

In the description of the embodiments of the present application, the term "a plurality of" refers to two or more, unless otherwise specifically defined. Similarly, "a plurality of groups" refers to more than two groups, and "a plurality of sheets" refers to more than two sheets, unless otherwise specifically defined.

In the description of the embodiments of the present application, orientations or positional relationships indicated by technical terms such as "center", "longitudinal", "crosswise", "length", "width", "thickness", "up", "down", "front", "rear", "left", "right", "vertical", "horizontal", "top", "bottom", "inside", "outside", "clockwise", "counterclockwise", "axial direction", "radial direction" and "circumferential direction" are orientations or positional relationships shown based on the drawings, and the terms are merely for convenience of describing the embodiments of the present application and for simplifying the description, but not for indicating or implying that an indicated apparatus or element must have a specific orientation, and must be constructed and operated in a specific orientation, which thus may not be understood as limiting the embodiments of the present application.

In the description of the embodiments of the present invention, unless otherwise explicitly specified and defined, the technical terms "mounting", "connecting", "connection" and "fixing" should be understood in a broad sense, for example, they may be a fixed connection, a detachable connection, or an integrated connection; may also be a mechanical connection, or may be an electrical connection; may be a direct connection; may also be an indirect connection via an intermediate medium, or may be communication between the interiors of two elements or the interaction between two elements. For those of ordinary skill in the art, the specific meanings of the above terms in the embodiments of the present application can be understood according to specific circumstances.

At present, from the development of market situation, the application of power batteries is becoming more extensive. The power batteries are not only applied to energy storage power systems, such as water power, heat power, wind power and solar power stations, but also widely applied to electric vehicles, such as electric bicycles, electric motorcycles, electric vehicles, as well as military equipment, aerospace and other fields. With the continuous expansion of power battery application fields, the market demand thereof is also constantly expanding.

The inventors of the present application noted that when the secondary battery is activated and charged for the first time, a negative electrode sheet will expand and rebound after lithium intercalation, and the volume is relatively large, especially in the new generation of high energy density silicon negative electrode system, a volume expansion rate of pure silicon lithium intercalation is more than 300%, which will lead to serious wrinkling of interfaces of negative and positive electrode sheets. When the wrinkling is serious, a transmission distance of lithium ions between the positive and negative electrode sheets will increase, and it is easy to cause problems such as lithium precipitation and increase of expansion force on a negative electrode surface during use. With the service life cycle going on, lithium dendrite growth is easy to occur during lithium precipitation, which pierces a membrane and eventually leads to a failure of a cell.

The inventors further researched and found that when charging for the first time, put flat clamps on two large faces of the battery and apply a certain preload, which may enable an internal cell to abut a housing in advance when the internal cell is charged and expand, reduce free expansion space, and the positive and negative electrodes are in close contact and uniformly expanded and thickened, which may effectively improve the problem of interface wrinkling. However, due to the influence of production process, in order to prevent an edge from bulging and bursting when an active substance is compacted by rolling, the coating thickness of the active substance in an edge region close to a tab side will be less than the coating thickness in a middle region when the positive and negative electrode sheets are coated, that is, a thinned design is adopted. The thinned design will cause the preload of a conventional planar clamp to be applied to a central region of the large face; the thinned area on the tab side of the electrode sheet cannot be effectively fitted, and the thinned area will still be prone to wavy folds during the charging and expansion.

Moreover, the clamp with constant spacing have disadvantages. If the spacing is too large, an effect of force bearing is not good, and an interface improvement effect is poor. If the spacing is too small, pressure on the cell is too large and the expansion of the cell in the height and width direction is larger, bringing other safety risks.

Based on the above considerations, the inventors believed that the best way to solve the above problems of the planar clamp is a constant voltage compressible clamp charging method, adding a buffer pad that can be compressed according to the expansion force between the clamp and the cell can effectively improve the problems of the planar clamp.

However, after further research, the inventors found that if the compressed buffer pad is integrated on a production line clamp, the compressed buffer pad will be fatigued and needs to be replaced regularly after long-term use. Moreover, production consistency of each cell cannot be guaranteed. Therefore, the thickness of the compressed buffer pad cannot be adapted to all cells. In addition, a battery module requires a certain amount of preload during assembly, but during the use, the battery will continue to expand, causing the battery module to bear more and more expansion force, affecting the service life of the battery module, which has greater safety risks.

In this regard, the inventors thought that it is possible to equip the cell with a suitable buffer pad when assembling the battery module, for example, placing the buffer pad inside the battery module, so it can not only reduce the expansion force borne by the battery module, but also solve the problems of fatigue and consistency of integrating the buffer pad on the clamp.

The inventors further found that the built-in buffer pad is not specially designed for the thinned area of the electrode sheet, and the problem of wrinkling in the thinned area cannot be improved. After providing the buffer pad, an indispensable insulating pad is also additionally provided, and the buffer pad and the insulating pad will increase the volume of the battery, and the space utilization rate is not up to the limit.

Based on all the above research, the inventors carried out structure transformation to the buffer pad. In an embodiment of a battery cell provided by the present application, a buffer pad is abutted against a side face of a main body portion, that is, the buffer pad directly wraps a bare cell, and a first side wall of the buffer pad includes a first buffer portion with the large thickness and a second buffer portion with the small thickness, where the first buffer portion with the large thickness is provided corresponding to a first main body region with the small thickness, for example, the first buffer portion fills a recess formed in the first main body region relative to a second main body region, and the second buffer portion with the small thickness is provided corresponding to the second main body region with the large thickness. After such setting, even if the main body portion has a thinned area, the thickened part of the first buffer portion of the buffer pad relative to the second buffer part can make up for the thinned area of the main body portion, such that the main body portion and the buffer pad are fitted to form a flat overall structure with the uniform thickness, so that when using a plane clamp with constant spacing, the main body portion may be subjected to uniform preload, effectively improving the wrinkling of positive and negative electrode interfaces during use of the battery. The buffer pad may also reduce the bump and damage of the bare cell under extreme conditions such as impact and extrusion, relieve the expansion stress during the use of the battery, and improve safety of a whole life cycle.

A battery cell disclosed in the embodiments of the present application may be used, but not limited, in power consumption devices such as vehicles, ships, or aircrafts. It is possible to use the battery cell and battery disclosed in the present application to form a power supply system of the power consumption device, which is conducive to alleviating and automatically adjusting the deterioration of expansion force of the cell, supplementing the consumption of an electrolytic solution, and improving the stability of battery performance and battery life.

The embodiments of the present application provide a power consumption device using a battery as a power source, and the battery is configured to provide electric energy to the power consumption device. The power consumption devices may be, but not limited to mobile phones, portable devices, notebook computers, battery carts, electric vehicles, ships, spacecrafts, electric toys, electric tools, and the like, for example, the spacecrafts include airplanes, rockets, space shuttles, spaceships, and the like; the electric toys include fixed or mobile electric toys, such as game consoles, electric vehicle toys, electric ship toys, electric airplane toys, and the like; the electric tools include metal cutting power tools, grinding power tools, assembly power tools and railway power tools, such as electric drills, electric grinders, electric wrenches, electric screwdrivers, electric hammers, impact drills, concrete vibrators, and electric planers.

In the following embodiments, for the convenience of description, a vehicle 1000 is used as an example of a power consumption device in an embodiment of the present application.

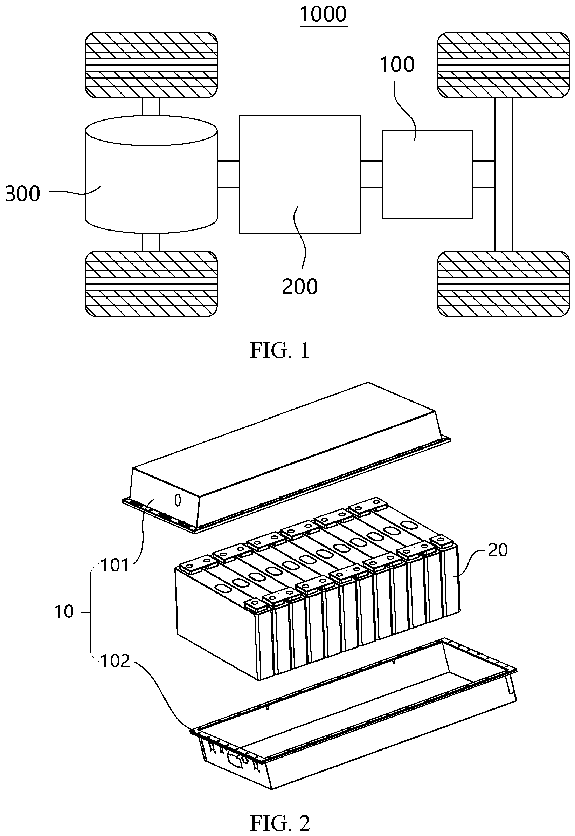

Please refer to FIG. 1, FIG. 1 is a schematic structural diagram of a vehicle 100 according to some embodiments of the present application. The vehicle 1000 may be a fuel-powered vehicle, a gas-powered vehicle or a new energy vehicle, and the new energy vehicle may be a battery electric vehicle, a hybrid vehicle, an extended-range vehicle, and the like. The interior of the vehicle 1000 is provided with a battery 100, and the battery 100 may be provided at the bottom, head or tail of the vehicle 1000. The battery 100 may be used to supply power to the vehicle 1000, for example, the battery 100 may be used as an operation power supply of the vehicle 1000. The vehicle 1000 may also include a controller 200 and a motor 300. The battery 100 is configured to provide electric energy for the motor 300 and other parts in the vehicle. The controller 200 is configured to control the operation of the motor 300, for example, for starting, navigation and working power demand of the vehicle 1000.

In some embodiments of the present application, the battery 100 may be used not only as the operation power supply of the vehicle 1000 but also as a driving power supply of the vehicle 1000, replacing or partially replacing fuel or natural gas to provide driving power for the vehicle 1000.

Please refer to FIG. 2. FIG. 2 is an exploded view of a battery 100 according to some embodiments of the present application. A battery 100 includes a box body 10 and a battery cell 20, and the battery cell 20 is accommodated in the box body 10, where the box body 10 is configured to provide accommodating space for the battery cell 20, and the box body 10 may adopt various structures. In some embodiments, the box body 10 may include a first cover body 101 and a second cover body 102, the first cover body 101 and the second cover body 102 cover each other, and the first cover body 101 and the second cover body 102 jointly define the accommodating space configured to accommodate the battery cell 20. The second cover body 102 may be a hollow structure with an opening at one end, the first cover body 101 may be a plate-shaped structure, and the first cover body 101 covers an opening side of the second cover body 102, such that the first cover body 101 and the second cover body 102 jointly define the accommodating space. The first cover body 101 and the second cover body 102 may also both be hollow structures with an opening on one side, and the opening side of the first cover body 101 covers the opening side of the second cover body 102. Certainly, the box body 10 formed by the first cover body 101 and the second cover body 102 may be in various shapes, such as a cylinder or a cuboid.

In the battery 100, there may be a plurality of battery cells 20, and the plurality of battery cells 20 may be in series connection, parallel connection or series-parallel connection. The series-parallel connection refers that the plurality of battery cells 20 are connected in series and in parallel. The plurality of battery cells 20 may be directly connected in series, parallel or series-parallel, and then a whole composed of the plurality of battery cells 20 is accommodated in the box body 10. Certainly, the battery 100 may also be a battery module composed of the plurality of battery cells 20 connected in series, parallel or series-parallel first, and then a plurality of battery modules may be connected in series, parallel or series-parallel to form a whole, which is accommodated in the box body 10. The battery 100 may further include other structures, for example, the battery 100 may further include a bus part configured to implement an electrical connection between the plurality of battery cells 20.

The battery cell 20 includes lithium-ion secondary batteries, lithium-ion primary batteries, lithium-sulfur batteries, sodium/lithium-ion batteries, sodium-ion batteries or magnesium-ion batteries, which is not limited by the embodiments of the present disclosure. The battery cell may be cylindrical, flat, cuboid or in other shapes, which is not limited by the embodiments of the present disclosure. The battery cell is generally divided into three types according to the way of packaging: a cylindrical battery cell, a prismatic battery cell, and a pouch battery cell, which is not limited by the embodiments of the present disclosure.

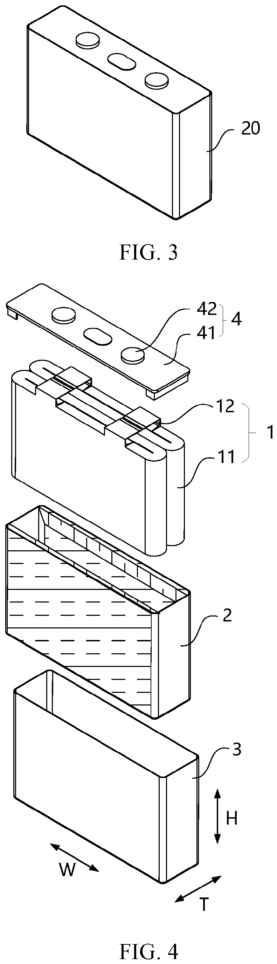

Please refer to FIGS. 3 and 4. FIG. 3 is a schematic structural diagram of a battery cell 20 according to some embodiments of the present application; and FIG. 4 is an exploded view of a battery cell 20. The battery cell 20 refers to a smallest unit forming a battery. As shown in FIG. 4, in some embodiments of a battery cell 20 according to the present application, the battery cell 20 includes an electrode assembly 1, a buffer pad 2, a housing 3, and an end cover assembly 4.

The housing 3 is a part configured to provide accommodation space to accommodate an electrode assembly, an electrolytic solution, and other components accommodated therein. The interior of the housing 3 is provided with an accommodating cavity with an opening, and the end cover assembly 4 includes an end cover 41 configured to close the opening and a terminal 42 provided on the end cover 41. The housing 3 and the end cover 41 may be independent parts, the housing 3 is provided with an opening, and an internal environment of the battery cell 20 is formed by covering the opening with the end cover 41 at the opening. Without limitation, the end cover 41 and the housing 3 may also be integrated. Specifically, the end cover 41 and the housing 3 may form a common connection face before other components are inserted into the housing, and when the interior of the housing 3 needs to be encapsulated, then the end cover 41 is made to cover the housing 3. The housing 3 may be in various shapes and sizes, such as cuboid, cylinder, hexagonal prism. Specifically, the shape of the housing 3 may be determined according to the specific shape and size of the electrode assembly 1. The housing 3 may be made of various materials, such as copper, iron, aluminum, stainless steel, aluminum alloy, plastic, which is not particularly limited in the embodiments of the present application.

The housing 3 is a component for matching the end cover 41 to form the internal environment of the battery cell 20. The end cover 41 is a part that covers the opening of the housing 3 to isolate the internal environment of the battery cell 20 from the external environment. Without limitation, the shape of the end cover 41 may be adapted to the shape of the housing 3 to match the housing 3. Optionally, the end cover 41 may be made of a material with a certain hardness and strength, such that the end cover 41 is not easily deformed when it is squeezed and expanded, and the battery cell 20 can have higher structure strength and improved safety performance. The terminal 42 and other parts may be provided on the end cover 41. The terminal 42 may be configured for the electrical connection with the electrode assembly 1 for outputting or inputting electric energy of the battery cell 20. In some embodiments, the end cover 41 may further be provided with a pressure relief mechanism for releasing internal pressure when internal pressure or temperature of the battery cell 20 reaches a threshold value. The end cover 41 may be made of various materials, such as copper, iron, aluminum, stainless steel, aluminum alloy, plastic, which is not particularly limited in the embodiments of the present application. In some embodiments, an insulating member may also be provided on an internal side of the end cover 41, and the insulating member may be configured to isolate electrical connection parts in the housing 3 from the end cover 41 to reduce a risk of short circuit. Exemplarily, the insulating member may be plastic, rubber, and the like.

The electrode assembly 1 is a part where an electrochemical reaction occurs in the battery cell 20. The housing 3 may contain one or more electrode assemblies 1. The electrode assembly 1 is mainly formed by winding or laminating a positive electrode sheet and a negative electrode sheet, and a membrane is usually provided between the positive electrode sheet and the negative electrode sheet. The electrode assembly 1 includes a cell and two tabs 12 extending from the cell. Surfaces of the positive electrode sheet and the negative electrode sheet are coated with an active substance layer, and a part with an active substance forms a main body portion 11 of the electrode assembly 1. The parts of the positive electrode sheet and the negative electrode sheet that do not have active substances respectively extend to form two tabs 12 of the electrode assembly 1. A positive electrode tab and a negative electrode tab may be jointly located at one end of the main body portion 11 or at two ends of the main body portion 11 respectively. During the charging and discharging process of the battery, a positive electrode active substance and a negative electrode active substance react with the electrolytic solution, and the tab 12 is connected to the terminal 42 to form a current loop. The electrode sheet may be a winding structure or a laminated structure, which is not limited in the embodiments of the present application.

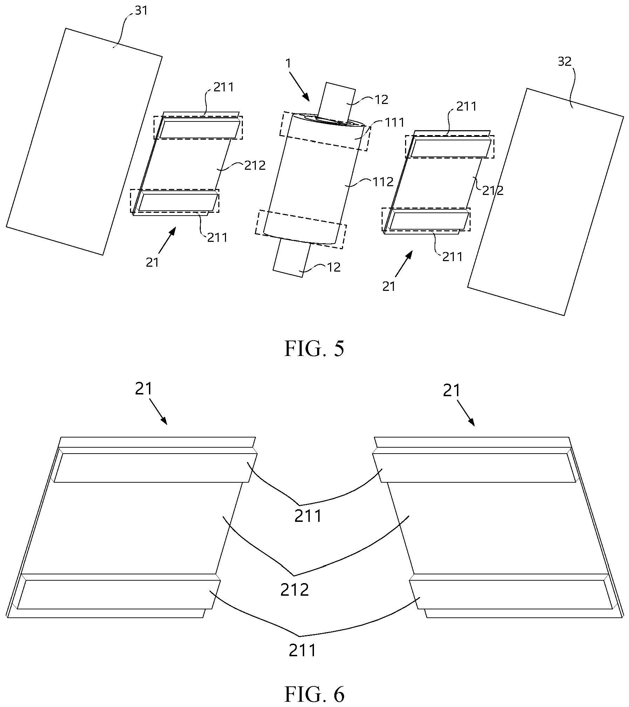

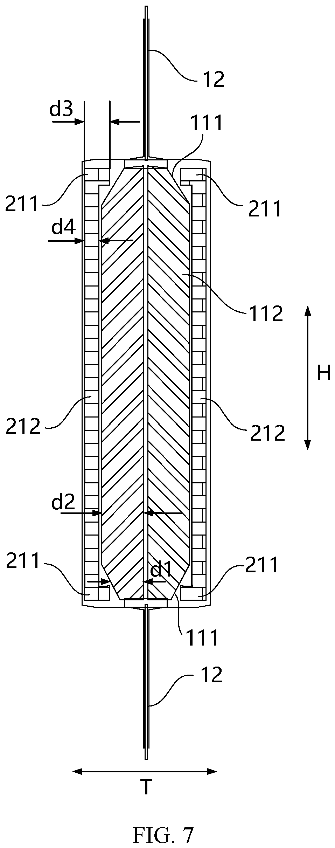

According to some embodiments of the present application, referring to FIGS. 5 to 7, the present application provides a battery cell 20. The battery cell 20 includes an electrode assembly 1 and a buffer pad 2, where the electrode assembly 1 includes a main body portion 11 and a tab 12 extending from the main body portion 11, the main body portion 11 includes a first main body region 111 and a second main body region 112, the thickness d1 of the first main body region 111 along a first direction T is smaller than the thickness d2 of the second main body region 112 along the first direction T; and the buffer pad 2 includes a compressible first side wall 21, where the first side wall 21 includes a first buffer portion 211 and a second buffer portion 212, the thickness d3 of the first buffer portion 211 along the first direction T is greater than the thickness d4 of the second buffer portion 212 along the first direction T, and the buffer pad 2 is provided on a side face of the main body portion 11, such that the first buffer portion 211 is provided corresponding to the first main body region 111, and the second buffer portion 212 is provided corresponding to the second main body region 112.

In the embodiments provided by the present application, by providing the first buffer portion 211 and the second buffer portion 212 with different thicknesses, the first buffer portion 211 with the larger thickness may be used to make up for the smaller thickness of the first main body region 111, such that the overall thickness of the main body portion 11 and the buffer pad 2 is substantially uniform, thereby improving a problem of interface wrinkling in the first main body region 111.

Moreover, the whole of the first side wall 21 of the buffer pad 2 is compressible, which may be configured to alleviate the increase of expansion force of the battery during the use, reduce an impact on parts located outside the main body portion 11, and increase the service life of the battery cell 20, which is also conducive to improving the safety of the battery cell 20 during the use.

In some embodiments of the present application, the thickness of the first main body region 111 is smaller than the thickness of the second main body region 112, specifically, the coating thickness of the electrode sheet of the first main body region 111 is smaller than the coating thickness of the electrode sheet of the second main body region 112. By adopting the thinned design, it is set that the coating thickness of the electrode sheet of the first main body region 111 is less than the coating thickness of the electrode sheet of the second main body region 112, which may prevent the edge from bulging and bursting when the active substance is compacted by rolling.

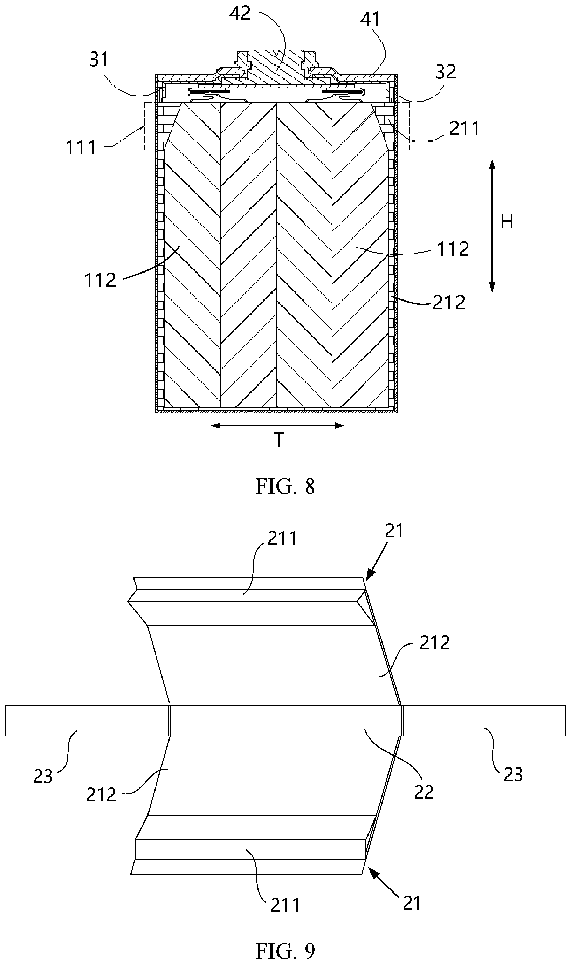

The setting positions of the first buffer portion 211 and the second buffer portion 212 may be determined according to the shape of the main body portion 11. For example, in the embodiments shown in FIGS. 5 to 7, upper and lower parts of the main body portion 11 are respectively provided with the first main body region 111 with the smaller thickness, the thickness of the second main body region 112 is larger than the thickness of the first main body region 111, and the thickness of the second main body region 112 is constant. Therefore, accordingly, the first side wall 21 is provided with two first buffer portions 211, which are respectively provided corresponding to two first main body regions 111. The thickness of the second buffer portion 212 is smaller than the thickness of the first buffer portion 211, and the second buffer portion 212 may adopt an equal thickness design, that is, the thickness is constant. In the embodiments shown in FIGS. 8 to 11, an upper part of a main body portion 11 is provided with a first main body region 111, and below the first main body region 111 is a second main body region 112 with the uniform thickness, so the first side wall 21 is provided with one first buffer portion 211, and the thickness of a second buffer portion 212 may also be set to be constant.

In the embodiments provided by the present application, the battery cell further includes a housing 3 for accommodating an electrode assembly 1, and the housing 3 may use a hard housing, such as a hard plastic shell, aluminum shell, steel shell. The housing 3 may also use a soft bag, such as a bag-type soft bag, and a material of the soft bag may be plastic, such as one or more of polypropylene PP, polybutylene terephthalate PBT, polybutylene succinate PBS.

In some embodiments, the housing 3 is made of a soft material, an accommodating cavity is provided inside the housing 3, the main body portion 11 is provided in the accommodating cavity, and the buffer pad 2 is provided outside the housing 3. Since the housing 3 is made of the soft material, providing the buffer pad 2 outside the housing 3 may also make up for the first main body region 111 with the smaller thickness of the main body portion 11, improving the wrinkling problem of the first main body region 111.

Certainly, in some embodiments, even if the housing 3 is made of the soft material, the buffer pad 2 may also be provided inside the housing 3.

As shown in FIGS. 5 to 7, a housing 3 is made of the soft material, the housing 3 includes a first housing wall 31 and a second housing wall 32, the first housing wall 31 and the second housing wall 32 are connected to form a bag-type soft bag structure. Both a main body portion 11 and a buffer pad 2 are provided inside the housing 3.

In other embodiments, the housing 3 is made of a hard material, an accommodating cavity is provided inside the housing 3, and the main body portion 11 and the buffer pad 2 are provided in the housing 3.

As shown in FIG. 8, a housing 3 is made of a hard material, which may increase rigidity of the housing 3 and avoid deformation of the housing 3. When the housing 3 is made of the hard material, both a buffer pad 2 and a main body portion 11 are provided inside the housing 3, such that the buffer pad 2 protects the main body portion 11 more directly, and a fitting effect between the buffer pad 2 and the main body portion 11 is also better at the same time, which may more effectively improve the problem of wrinkling in the first main body region 111 where the thickness of the main body portion 11 is small. The buffer pad 2 is provided inside the housing 3, which may also prevent the buffer pad 2 from being affected by edges and corners of the hard housing 3, and may better exert an effect of a thickness gradient design, such that the first buffer portion 211 may be closely fitted with the thinned area of the main body portion 11, improving a wrinkle effect and playing a better protection and buffering effect.

In some embodiments, the first side wall 21 includes an insulating part made of an insulating material and a buffer part made of a compressible material; or the first side wall 21 is made of a compressible insulating material.

By setting the first side wall 21 with an insulating property, a special insulating pad may be omitted, saving internal space of the housing 3, and improving space utilization. Omitting the special insulating pad may also improve assembly efficiency.

In some embodiments, an insulating layer is pasted on a surface of the first sidewall 21.

In some embodiments, the first buffer portion 211 includes a base portion and a thickened portion, the base portion and the second buffer portion 212 have the same thickness, and the thickened portion makes the total thickness of the first buffer portion 211 greater than the thickness of the second buffer portion 212.

In some embodiments, the base portion and the second buffer portion 212 are integrally formed, or the base portion and the thickened portion are integrally formed.

In the embodiment where the first side wall 21 has the insulating property, the base portion may be set to be made of the insulating material, or the thickened part may be set to be made of the insulating material, and the insulating layer may also be pasted on a surface of the base portion or the thickened portion.

The material type of the buffer pad 2 may be selected according to the expansion force of the main body portion 11 and the thickness to be compressed.

In some embodiments, the first sidewall 21 is made of porous foam or aerogel. A high porosity of a porous compressible foam may better infiltrate an electrolytic solution, improve a liquid injection rate and a liquid retention capacity of the cell during the use.

In some embodiments, a thickened part of the first buffer portion 211 relative to the second buffer portion 212 has the thickness varying in a second direction H, the second direction H is perpendicular to the first direction T. The thickness of the thickened part in the first direction T varies along the second direction H.

In some embodiments, the second buffer portion 212 has the thickness constant in a second direction H, the second direction H is perpendicular to the first direction T. The thickness of the second buffer portion 212 in the first direction T is constant along the second direction H.

In some embodiments, the thickened part of the first buffer portion 211 relative to the second buffer portion 212 includes at least one of a flat plate portion, a wedge portion, a step portion, a trapezoidal portion, or an arc portion.

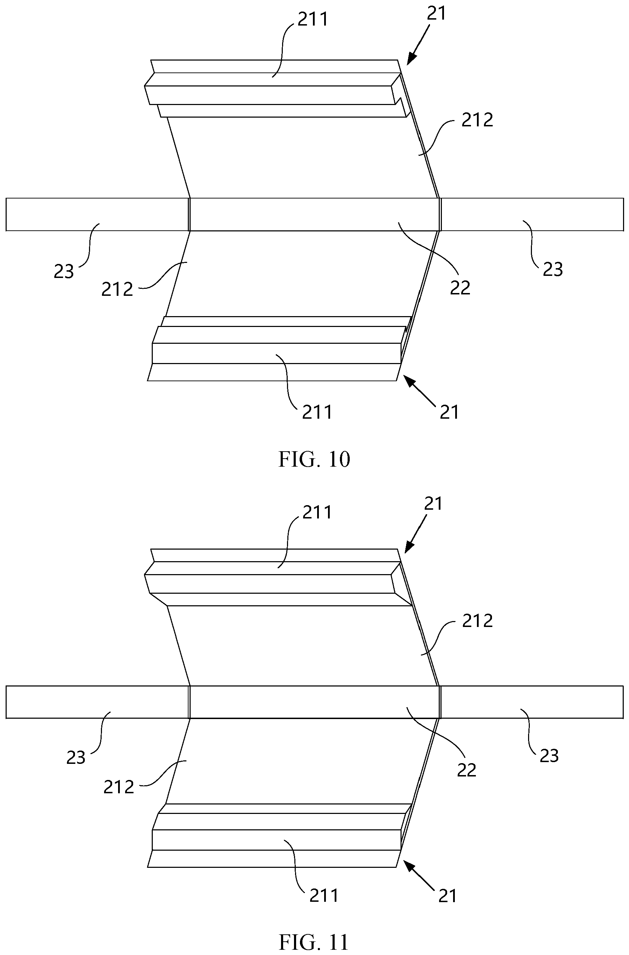

As shown in FIGS. 5 to 7, the thickened part of the first buffer portion relative to the second buffer portion 212 is in a shape of the flat plate. As shown in FIGS. 8 and 9, the thickened part of the first buffer portion relative to the second buffer portion 212 is in a shape of the wedge. As shown in FIG. 10, the thickened part of the first buffer portion relative to the second buffer portion 212 is in a shape of the step. As shown in FIG. 11, the thickened part of the first buffer portion relative to the second buffer portion 212 is in a shape of the trapezoid. Although not shown in the figures, in other embodiments, the thickened part of the first buffer portion relative to the second buffer portion 212 is in a shape of the arc or other shapes, and may also be any combination of one or more of the flat plate shape, wedge shape, step shape, trapezoid shape and arc shape.

In some embodiments, the first buffer portion 211 and the second buffer portion 212 are integrally formed. In this way, the assembly efficiency may be effectively improved.

In some embodiments, the increased thickness of the first buffer portion 211 relative to the second buffer portion 212 is not less than the reduced thickness of the first main body region 111 relative to the second main body region 112. This interference design may make a recess formed in the first main body region 111 may be fully filled through the first buffer portion 211, such that the first main body region 111 may be fully fitted with the first buffer portion 211, ensuring that a charging interface is flat and not wrinkled.

In some embodiments, the width of the first buffer portion 211 along a third direction W is not greater than the width of the first main body region 111 along the third direction W, and the third direction W is perpendicular to the first direction T. This setting may make the width of the first buffer portion 211 smaller than the width of the first main body region 111 in the third direction W, such that a whole composed of the main body portion 11 and the buffer pad 2 may be smoothly put into the interior of the housing 3, improving assembly convenience.

In some embodiments, the thickness of the second main body region 112 is 0.5 mm~50 mm.

The thickness of the second main body region 112 may adopt an equal thickness design, which may be specifically determined according to design conditions such as the initial thickness of the main body portion 11, the thickness of the accommodating cavity inside the housing 3, the maximum rebound thickness of the main body portion 11 during the use, and assembly tolerance. For example, the initial thickness of the second main body region 112 of the buffer pad 2 = the thickness of the accommodating cavity inside the housing 3 - the initial thickness of the main body portion 11 - assembly tolerance, such that the positive and negative electrode sheets are tightly fitted with each other in an initial state.

In some embodiments, the compressible thickness of the buffer pad 2 is not less than the maximum rebound thickness of the main body portion 11, so as to alleviate the increase of expansion force during the use.

In some embodiments, the first buffer portion 211 and the second buffer portion 212 have the same or different compression rates when borne by the same compressive stress. This setting may make the first buffer portion 211 and the second buffer portion 212 have the same or different buffer performance, so as to relieve the stress caused by the expansion and deformation of the cell, which is convenient to adaptively set compression performance of the first buffer portion 211 and the second buffer portion 212 according to the expansion of the cell.

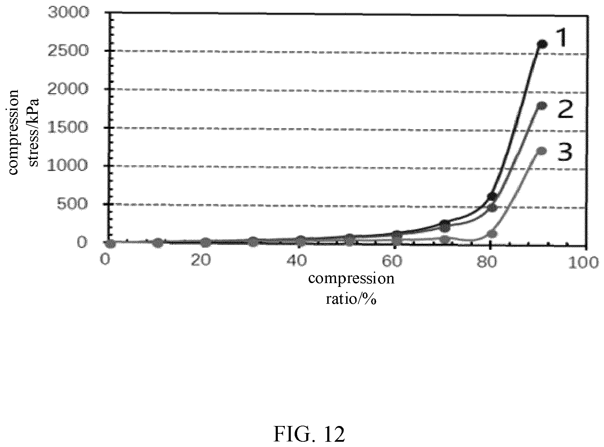

Compressive stress curves of different buffer pads 2 are different, as shown in FIG. 12, which shows the compressive stress curves of three different buffer pads 2.

In some embodiments, the compressive stress curve of the buffer pad 2 should satisfy that, under the corresponding expansion force, a maximum compressible ratio of the buffer pad 2 * the initial thickness of the buffer pad 2 > the thickness to be compressed > the maximum rebound amount of the main body portion 11.

In some embodiments, the battery cell 20 includes the electrode assembly 1, the electrode assembly 1 includes the main body portion 11, one side of the main body portion 11 is provided with a thinned area, the buffer pad 2 includes the first side wall 21, and the first side wall 21 is provided the on one side of the main body portion 11 where the thinned area is provided.

In some embodiments, the buffer pad 2 includes two first side walls 21 opposite to each other, and the two first side walls 21 are respectively abutted against two opposite side faces of the main body portion 11.

As shown in FIGS. 5 to 7, a battery cell 20 includes an electrode assembly 1, the electrode assembly 1 includes a main body portion 11, and two sides of the main body portion 11 are respectively provided with thinned areas. A buffer pad 2 includes two first side walls 21, and the two first side walls 21 are respectively provided on two sides of the main body portion 11.

In other embodiments, the buffer pad 2 includes two first side walls 21 opposite to each other, and the two first side walls 21 are respectively abutted against side faces far away from each other of two adjacent provided battery cells.

As shown in FIG. 8, a battery cell 20 includes two electrode assemblies 1, each electrode assembly 1 includes a main body portion 11, and the two main body portions 11 are both provided with a thinned area on one side. At this time, sides of two main body portions 11 without the thinned areas may be provided adj acent to each other, while sides with the thinned areas are far away from each other. A buffer pad 2 includes two first side walls 21, and the two first side walls 21 are respectively abutted against side faces far away from each other of the two main body portions 11. In this way, the space may be saved and the space utilization is improved.

In the embodiment shown in FIG. 8, two electrode assemblies 1 are respectively provided with one first side wall 21, which is equivalent to sharing a buffer pad 2 in a box shape.

In the embodiment shown in FIG. 8, two main body portions 11 are provided adjacent to each other, and the buffer pad 2 is not provided between the two main body portions 11. At this time, a heat insulating pad may be provided between the two main body portions 11 for security protection.

In some embodiments, the battery cell 20 includes a plurality of electrode assemblies 1, the main body portion 11 of each electrode assembly 1 corresponds to an independent buffer pad 2, and a structure of the buffer pad 2 may be selected to provide one first sidewall 21 or two first sidewalls 21 according to a structure of the main body portion 11.

In some embodiments, the battery cell further includes an end cover 41, where the buffer pad 2 further includes a connecting portion connected with the end cover 41. By connecting the buffer pad 2 with the end cover 41, a relative motion between the buffer pad 2 and the main body portion 11 may be prevented, improving the stability of the buffer pad 2, and avoiding failure of the buffer pad 2 due to dislocation.

The battery cell 20 includes an end cover assembly 4, the end cover assembly 4 includes the end cover 41 and a connecting member, the connecting member is connected below the end cover 41, and the buffer pad 2 is connected to the connecting member. The connecting member may be made of plastic or other materials. The thickness of the connecting portion of the buffer pad 2 along the first direction W may be the same as the thickness of the first buffer portion 211, or may be different from the thickness of the first buffer portion 211, for example, may be the same as the thickness of the second buffer portion 212.

In some embodiments, the buffer pad 2 further includes a bottom wall 22 and two second side walls 23, where the bottom wall 22, the two second side walls 23, and the two first side walls 21 are connected to form the buffer pad 2 in a box shape with an opening at the top. In this way, the buffer pad 2 may be formed as a complete whole, and it is convenient to wrap the main body portion 11 inside the buffer pad 2.

In some embodiments, the bottom wall 22 and the two second side walls 23 are relatively independent parts. In another embodiment, the bottom wall 22 and the two second side walls 23 are integrally formed.

In some embodiments, the bottom wall 22, the two second side walls 23 and the two first side walls 21 are relatively independent parts. The bottom wall 22, the two second side walls 23 and the two first side walls 21 may be connected by adhesive bonding.

In another embodiment, the bottom wall 22, the two second side walls 23 and the two first side walls 21 are integrally formed, such as tailor welding or splicing and hot melting, which may effectively improve the assembly efficiency.

In some embodiments, the sizes of the bottom wall 22 and the second side wall 23 are configured so that the thickness of the buffer pad 2 composed of the bottom wall 22, the two second side walls 23 and the two first side walls 21 along a first direction TT, the width along a second direction H and the height along a third direction H are respectively the same as the thickness of the main body portion 11 along the first direction TT, the width along the second direction H and the height along the third direction H as a whole respectively, or the thickness of the buffer pad 2 composed of the bottom wall 22, the two second side walls 23 and the two first side walls 21 along the first direction TT, the width along the second direction H and the height along the third direction H are slightly larger than the thickness of the main body portion 11 along the first direction TT, the width along the second direction H and the height along the third direction H respectively.

In some embodiments, the second side wall 23 and/or the bottom wall 22 are made of the insulating material. For example, the second side wall 23 and/or the bottom wall 22 may be made of light and thin Mylar membrane.

In some embodiments, the surface of the second side wall 23 and/or the bottom wall 22 is pasted with an insulating layer whose thickness is not more than 0.2 mm.

In some embodiments, the second side wall 23 and/or the bottom wall 22 are provided with a through hole, so as to facilitate the electrolytic solution to flow into the buffer pad 2 and infiltrate the main body portion 11.

The present application further provides a battery, including the above battery cell.

The present application further provides a power consumption device, including the above battery configured to supply electrical energy to the power consumption device.

The present application further provides a method of manufacturing a battery cell, including:
providing an electrode assembly 1, the electrode assembly 1 including a main body portion 11 and a tab 12 extending from the main body portion 11, where the main body portion 11 includes a first main body region 111 and a second main body region 112, the thickness of the first main body region 111 along a first direction T is smaller than the thickness of the second main body region 112 along the first direction T; and
providing a buffer pad 2, the buffer pad 2 including a compressible first side wall 21, where the first side wall 21 includes a first buffer portion 211 and a second buffer portion 212, the thickness of the first buffer portion 211 along the first direction T is greater than the thickness of the second buffer portion 212 along the first direction T, and the buffer pad 2 is abutted against a side face of the main body portion 11, such that the first buffer portion 211 corresponds to the first main body region 111, and the second buffer portion 212 corresponds to the second main body region 112.

The present application further provides a method of manufacturing a battery cell, including:
a first provision apparatus configured to provide an electrode assembly 1, the electrode assembly 1 including a main body portion 11 and a tab 12 extending from the main body portion 11, where the main body portion 11 includes a first main body region 111 and a second main body region 112, the thickness of the first main body region 111 along a first direction T is smaller than the thickness of the second main body region 112 along the first direction T; and
a second provision apparatus configured to provide a buffer pad 2, the buffer pad 2 including a compressible first side wall 21, where the first side wall 21 includes a first buffer portion 211 and a second buffer portion 212, the thickness of the first buffer portion 211 along the first direction T is greater than the thickness of the second buffer portion 212 along the first direction T, and the buffer pad 2 is abutted against a side face of the main body portion 11, such that the first buffer portion 211 corresponds to the first main body region 111, and the second buffer portion 212 corresponds to the second main body region 112.

Positive effects of the battery cell provided in the present application are also applicable to the battery, the power consumption device, and the apparatus and method of manufacturing the battery cell, which will not be described in detail here.

The embodiments of the battery cell provided by the present application is described below in combination with FIGS. 1 to 12.

As shown in FIG. 1, a power consumption device is a vehicle 1000, including a battery 100, a controller 200 and a motor 300. The battery 100 is configured to provide electric energy for the motor 300 and other parts in the vehicle, and the controller 200 is configured to control the operation of the motor 300.

As shown in FIG. 2, a battery 100 includes a box body 10 and a plurality of battery cells 20 provided in the box body 10. The box body 10 includes a first cover body 101 and a second cover body 102, and the first cover body 101 and the second cover body 102 form closed accommodating space.

As shown in FIGS. 3 and 4, a battery cell 20 includes an electrode assembly 1, a buffer pad 2, a housing 3 and an end cover assembly 4. The electrode assembly 1 includes a main body portion 11 and a tab 12 extending from the main body portion 11. The end cover assembly 4 includes an end cover 41 and a terminal 42 provided on the end cover 41, and the terminal 42 is electrically connected with the tab 12. The electrode assembly 1 may include one or more main body portions 11, and the buffer pad 2 may wrap each main body portion 11 or wrap a whole composed of a plurality of main body portions 11.

As shown in FIGS. 5 to 7, a housing 3 is made of a soft material, the housing 3 is connected with a first housing wall 31 and a second housing wall 32 to form a bag-type soft bag structure. The electrode assembly 1 includes a main body portion 11 and two tabs 12 respectively extending from two ends of the main body portion 11.

Two first main body regions 111 and one second main body region 112 located between the two first main body regions 111 are respectively provided on two sides of the main body portion 11. The buffer pad 2 includes two first side walls 21, and each first side wall 21 is respectively provided with a first buffer portion 211 corresponding to the first main body region 111 and a second buffer portion 212 corresponding to the second main body region 112. The two first sidewalls 21 are respectively on two sides of the main body portion 11. Both the main body portion 11 and the buffer pad 2 are provided inside the housing 3. A thickened part of the first buffer portion 211 relative to the second buffer portion 212 is in a shape of a flat plate.

As shown in FIGS. 8 and 9, a housing 3 is made of a hard material, the housing 3 includes a first housing wall 31, a second housing wall 32 and a bottom wall, the top of the housing 3 has an opening, and an end cover assembly 4 is closed over the opening. Two main body portions 11 are provided inside the housing 3, and the two main body portions 11 are provided adjacent to each other. Side faces of the two main body portions 11 away from each other are respectively provided with a first main body region 111 and a second main body region 112. A buffer pad 2 includes a bottom wall 22, two first side walls 21 and two second side walls 23, the bottom wall 22, the two first side walls 21 and the two second side walls 23 are connected to form a square shape with an opening at the top. The buffer pad 2 is wrapped outside the two main body portions 11, and the two first side walls 21 are respectively abutted against the side faces away from each other of the two main body portions 11. The thickened part of the first buffer portion 211 relative to the second buffer portion 212 is in a shape of a wedge.

As shown in FIG. 10, a structure of a buffer pad 2 is basically the same as that of the embodiment shown in FIG. 9, except that a thickened part of a first buffer portion 211 relative to a second buffer portion 212 is in a shape of a step.

As shown in FIG. 11, a structure of a buffer pad 2 is basically the same as that of the embodiment shown in FIG. 9, except that a thickened part of a first buffer portion 211 relative to a second buffer portion 212 is in a shape of an isosceles trapezoid.

As shown in FIG. 12, compression stress curves of three different buffer pads 2 are shown, buffer performance thereof are different, and a suitable buffer pad may be selected according to the requirements.

In some embodiments provided by the present application, the buffer pad 2 is internally directly wrapped with a bare cell, such that large faces and the thinned areas of positive and negative electrode sheets are closely fitted with different buffer portions of the buffer pad 2, and force borne by the electrode sheets is evenly expanded and rebounded, which may effectively improve interface wrinkling of the cell when it is fully charged. With the expansion and rebound of electrode sheets, expansion force of the cell increases, and the buffer pad 2 is continuously compressed to free up expansion space and alleviate an impact of expansion stress on the cell and a battery module end plate.

The present application provides a battery cell with a built-in buffer pad. Through the built-in buffer pad, the buffer pad may directly contact the main body portion, which improves liquid retention performance of the cell, reduces difficulty of liquid injection of the cell, and improves long-term performance of the cell. There is no need to provide the buffer pad between two battery cells. The space originally used to provide the buffer pad between the battery cells is transferred to internal space inside the battery, improving a utilization rate of battery space and group efficiency. A position of the buffer pad corresponding to the thinned area of the electrode sheet is thickened, and the buffer pad wraps the bare cell, such that the thinned areas of the electrode sheet of the cell are better closely fitted with each other, which effectively improve the interface wrinkling of the cell when it is fully charged. By providing the buffer pad, during the use of the cell, different thicknesses are compressed according to different expansion forces, the expansion space is provided, the increase in the expansion force is alleviated, and the stress impact is reduced between different cells or on the module and end plate. The buffer pad takes into account an insulating property, so there is no need to provide an additional insulating layer between a bare cell and an aluminum or steel shell, which improves the space utilization.

Although the present application has been described with reference to the preferred embodiments thereof, various modifications can be made thereto without departing from the scope of the present application, and the components therein can be replaced with equivalents. In particular, the technical features mentioned in each embodiment can be combined in any manner, as long as there is no structure conflict. The present application is not limited to the specific embodiments disclosed herein, but includes all technical solutions falling within the scope of the claims.

## Claims

1. A battery cell, comprising:
an electrode assembly (1), comprising a main body portion (11) and a tab (12) extending from the main body portion (11), wherein the main body portion (11) comprises a first main body region (111) and a second main body region (112), the thickness of the first main body region (111) along a first direction (T) is smaller than the thickness of the second main body region (112) along the first direction (T); and
a buffer pad (2), comprising a compressible first side wall (21), wherein the first side wall (21) comprises a first buffer portion (211) and a second buffer portion (212), the thickness of the first buffer portion (211) along the first direction (T) is greater than the thickness of the second buffer portion (212) along the first direction (T), and the buffer pad (2) is provided on a side face of the main body portion (11), such that the first buffer portion (211) is provided corresponding to the first main body region (111), and the second buffer portion (212) is provided corresponding to the second main body region (112).

2. The battery cell according to claim 1, further comprising a housing (3), wherein the housing (3) is made of a hard material, and an accommodating cavity is provided inside the housing (3), both the main body portion (11) and the buffer pad (2) are provided in the accommodating cavity; or the housing (3) is made of a soft material, and an accommodating cavity is provided inside the housing (3), the main body portion (11) is provided in the accommodating cavity, and the buffer pad (2) is provided outside the housing (3).

3. The battery cell according to claim 1 or 2, wherein the first side wall (21) comprises an insulating part made of an insulating material and a buffer part made of a compressible material; or the first side wall (21) is made of a compressible insulating material.

4. The battery cell according to any one of claims 1 to 3, wherein the first sidewall (21) is made of porous foam or aerogel.

5. The battery cell according to any one of claims 1 to 4, wherein a thickened part of the first buffer portion (211) relative to the second buffer portion (212) has the thickness varying in a second direction (H), the second direction (H) is perpendicular to the first direction (T); and/or the second buffer portion (212) has the thickness constant in a second direction (H), the second direction (H) is perpendicular to the first direction (T).

6. The battery cell according to any one of claims 1 to 5, wherein a thickened part of the first buffer portion (211) relative to the second buffer portion (212) comprises at least one of a flat plate portion, a wedge portion, a step portion, a trapezoidal portion, or an arc portion.

7. The battery cell according to any one of claims 1 to 6, wherein the first buffer portion (211) and the second buffer portion (212) are integrally formed.

8. The battery cell according to any one of claims 1 to 7, wherein the increased thickness of the first buffer portion (211) relative to the second buffer portion (212) is not less than the reduced thickness of the first main body region (111) relative to the second main body region (112); and/or the width of the first buffer portion (211) along a third direction (W) is not greater than the width of the first main body region (111) along the third direction (W), and the third direction (W) is perpendicular to the first direction (T).

9. The battery cell according to any one of claims 1 to 8, wherein the thickness of the second main body region (112) is 0.5 mm~50 mm.

10. The battery cell according to any one of claims 1 to 9, wherein the first buffer portion (211) and the second buffer portion (212) have the same or different compression rates when subjected to the same compressive stress.

11. The battery cell according to any one of claims 1 to 10, wherein the buffer pad (2) comprises two first side walls (21) opposite to each other, and the two first side walls (21) are respectively abutted against two opposite side faces of the main body portion (11); or the two first side walls (21) are respectively abutted against side faces far away from each other of two adjacent provided main body portions (11).

12. The battery cell according to any one of claims 1 to 11, further comprising an end cover (41), wherein the buffer pad (2) further comprises a connecting portion connected with the end cover (41).

13. The battery cell according to any one of claims 1 to 12, wherein the buffer pad (2) further comprises a bottom wall (22) and two second side walls (23), wherein the bottom wall (22), the two second side walls (23), and the two first side walls (21) are connected to form the buffer pad (2) in a box shape with an opening at the top.

14. The battery cell according to claim 13, wherein the second side wall (23) and/or the bottom wall (22) are made of the insulating material.

15. The battery cell according to claims 13 or 14, wherein the thickness of an insulating layer of the second side wall (23) and/or the bottom wall (22) is not more than 0.2 mm.

16. A battery, comprising the battery cell according to any one of claims 1 to 15.

17. A power consumption device, comprising the battery according to claim 16, wherein the battery is configured to supply electric energy to the power consumption device.

18. A method of manufacturing a battery cell, comprising:
providing an electrode assembly (1), the electrode assembly (1) comprising a main body portion (11) and a tab (12) extending from the main body portion (11), wherein the main body portion (11) comprises a first main body region (111) and a second main body region (112), the thickness of the first main body region (111) along a first direction (T) is smaller than the thickness of the second main body region (112) along the first direction (T); and
providing a buffer pad (2), the buffer pad (2) comprising a compressible first side wall (21), wherein the first side wall (21) comprises a first buffer portion (211) and a second buffer portion (212), the thickness of the first buffer portion (211) along the first direction (T) is greater than the thickness of the second buffer portion (212) along the first direction (T), and the buffer pad (2) is abutted against a side face of the main body portion (11), such that the first buffer portion (211) corresponds to the first main body region (111), and the second buffer portion (212) corresponds to the second main body region (112).

19. An apparatus of manufacturing a battery cell, comprising:
a first provision apparatus configured to provide an electrode assembly (1), the electrode assembly (1) comprising a main body portion (11) and a tab (12) extending from the main body portion (11), wherein the main body portion (11) comprises a first main body region (111) and a second main body region (112), the thickness of the first main body region (111) along a first direction (T) is smaller than the thickness of the second main body region (112) along the first direction (T); and
a second provision apparatus configured to provide a buffer pad (2), the buffer pad (2) comprising a compressible first side wall (21), wherein the first side wall (21) comprises a first buffer portion (211) and a second buffer portion (212), the thickness of the first buffer portion (211) along the first direction (T) is greater than the thickness of the second buffer portion (212) along the first direction (T), and the buffer pad (2) is abutted against a side face of the main body portion (11), such that the first buffer portion (211) corresponds to the first main body region (111), and the second buffer portion (212) corresponds to the second main body region (112).
